# EUROPEAN PATENT APPLICATION

(11) **EP 2 095 721 A1**
(43) Date of publication of application: **02.09.2009**
(21) Application number: 08004062.9
(22) Date of filing: 29.02.2008
(51) Int. Cl.: A23G 9/48, A23G 9/50, A23G 9/42

(54) **Frozen confectionary product**

(71) Applicant: Nestec S.A., 1800 Vevey (CH)
(72) Inventor: Garbi, Marco, 43100 Parma (IT); Gnaccarini, Gabriele, 43100 Parma (IT)
(74) Representative: Rupp, Christian

(57) **Abstract**

Disclosed is a frozen aqueous-based ice confectionary product including a center of water ice comprising a fruit juice content of 60 to 95 wt.-% and having a degree of overrun of 20 to 80 % and an outer shell and top coating of water ice comprising a fruit juice content of 60 to 95 wt.-%.

## Description

### Field of the Invention

The present invention relates to a frozen confectionary product having a very high fruit content. It also relates to a process for the production of this frozen aqueous-based ice confectionary product.

### Background of the Invention

Ice confections such as ice lollies, ice sticks, popsicles, slushes, sorbets etc. are very popular and well accepted by the consumers. These products are typically developed as water ice, fruit ice and milk ice. The consumers especially prefer very fresh ice confection products having an intensive natural fruit taste.

Ice cream products containing fruit are known. EP 1 400 176 A1 describes a frozen aerated product containing defined proportions of soluble dietary fiber and insoluble dietary fiber. This fiber material is derived from fruits or vegetables from one or more fruit purees, one or more vegetable purees or mixtures thereof. The products described do also contain considerable amounts of sugars, fat and milk components such as skimmed milk powder.

It is object of the invention to provide an added-fat-free frozen aqueous-based ice confectionary product with optimized nutritional balance, having an unmatched very high fruit content and a pleasant texture well accepted by the consumer.

### Summary of the Invention

In a first aspect, the invention provides a frozen aqueous-based ice confectionary product including:
- 0 to 100% of a center of aqueous-based ice comprising a fruit content of 60 to 95 wt.-% and having a degree of overrun of 20 to 80% and
- 0 to 100% of a non-aerated outer shell of aqueous-based ice comprising a fruit content of 60 to 95 wt.-%.

Preferably, the frozen aqueous-based ice confectionary product is a composite material comprising 40 to 50%of the center of aqueous-based ice and 30 to 50% of the outer shell.

In a second aspect, the invention provides a process for the production of a composite frozen aqueous-based ice confectionary product comprising the steps of
- introducing a liquid mixture here-referred as "external mixture" comprising a fruit content of 60 to 95 wt.-% in a mould,
- sucking out of the external liquid mixture after the shell is completely frozen,
- filling the center of the mould with a mixture here-referred as "internal mixture" comprising a fruit content of 60 to 95 wt.-% and having a degree of overrun of 20 to 80 % and
- filling further liquid external mixture in order to close the formed shell.

The present invention provides a unique frozen aqueous-based ice confectionary product which is characterized by an extremely high fruit content, an optimized nutritional balance and preferably a composite structure based on the combination of a soft central portion and an icy fresh outer shell.

The frozen aqueous-based ice confectionary product of the present invention is preliminarily based on aqueous-based ice having an extremely high fruit content which gives the product a natural character which is highly accepted by the consumers. Furthermore, the product of the invention advantageously presents an optimized nutritional balance in terms of sugar added, fibre content, fat content and total energy value. The product may be marketed as fruit sticks having inserted a stick for better handling. Lots of stick product shape are possible depending on the shape of the moulds.

The frozen aqueous-based ice confectionary product of the present invention is preferably fat-free and cholesterol-free and does not contain milk ingredients. Further, due to the sugar naturally derived from the fruit, the amounts of sugar added is limited.

### Brief description of the drawings

The present invention is further illustrated by the accompanying drawings.

Figure 1 is a schematic representation of one embodiment of the composite frozen aqueous-based ice confectionary product claimed.

Figure 2 shows the flow chart of an example of a process for the manufacture of the frozen aqueous-based ice confectionary product of the present invention.

Figure 3 shows schematically an example of process steps for the manufacture of the frozen aqueous-based ice confectionary product of the present invention.

### Detailed description of the preferred embodiments

One preferred feature of the frozen aqueous-based ice confectionary product of the present invention is the composite structure composed of an inner central portion with a degree of overrun ranging from 20 to 80% and a non-aerated outer shell surrounding at least partially the central portion. In a preferred embodiment of the present invention, the center is completely covered by the outer shell.

Another feature of the frozen aqueous-based ice confectionary product of the invention is the unmatched high fruit content in both the center of aqueous-based ice and the outer shell of aqueous-based ice being 60 to 95 wt.-%. The fruit content is composed of one or more natural fruit juice, fruit puree and/or fruit concentrate juice so as to reconstitute the respective original natural fruit compositions and water.

Preferably, the content of fruit in the center and in the outer shell is in a range of 75 to 90 wt.-%, more preferably, the content is in a range of 80 to 85 wt.-%.

The frozen aqueous-based ice confectionary product of the present invention is characterized by a high amount of fruit and by a product structure composed of a center of aqueous-based ice and an outer shell of aqueous-based ice. Specifically, the center is slightly freezed and comprises between 25 to 35 % of total solids. Further, the center has a degree of overrun of 20 to 80%, preferably 30 to 70 % and most preferred 40 to 60 %. The outer shell of water ice is not aerated. It is usually a liquid mixture having a content of total solids of between 15 to 35 %, more preferably 25 to 30%

In a particular embodiment of the present invention, the frozen aqueous-based ice confectionary product further comprises a top coating having the same composition as the outer shell. The top coating links with the shell and closes completely the inner part.

This particular product structure provides a creamy and smooth heart and an icy and fresh shell which is extremely pleasant for the consumer and can further contribute to the natural fruit character of the product claimed.

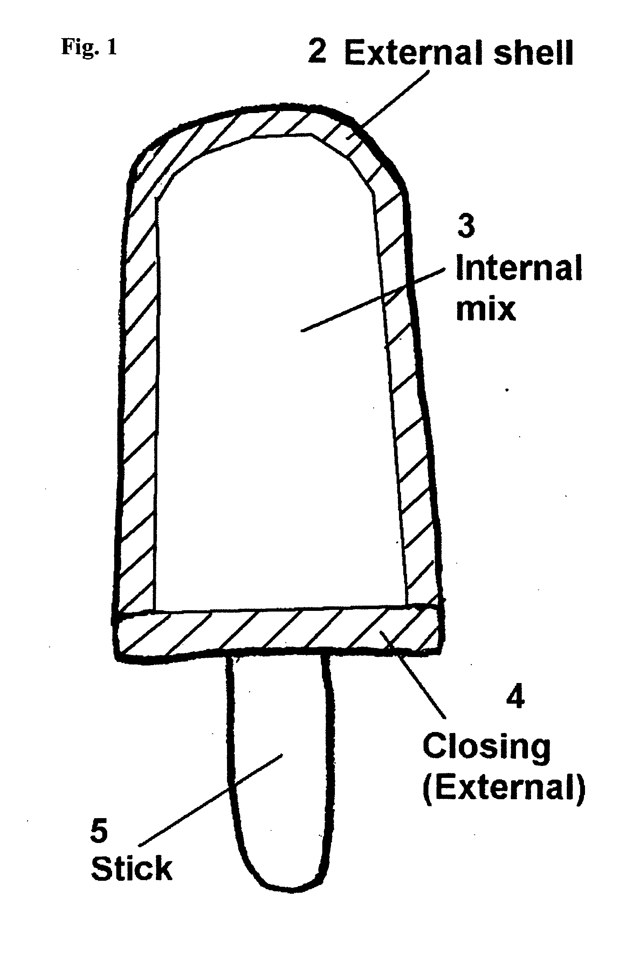

In figure 1, an example of a frozen aqueous-based ice confectionary product according to the invention is shown. The frozen aqueous-based ice confectionary product 1 which can be also called a fruit stick comprises an external shell 2 and an internal mix portion 3. A closing 4 is provided over to close the product. Finally, a stick 5, for example a wooden stick, is inserted in the confectionary product body.

The frozen aqueous-based ice confectionary product of the present invention contains a considerable amount of fruit sugar due to the high fruit content. If desired, the product may be further sweetened. In a preferred embodiment of the present invention, the frozen aqueous-based ice confectionary product further comprises 10 to 30 wt.-% of sweetener, more preferred 15 to 25 wt.-%. The sweetener is usually selected from monosaccharides, disaccharides and oligosaccharides, or according to specific requirements artificial sweeteners and mixtures thereof. Examples of sweeteners are dextrose, saccharose, glyco-syrups.

The frozen aqueous-based ice confectionary product of the invention preferably further comprises 1 to 6 wt.-% of fibers. The fibers come both from fruit and from edible added fibers. The added fibers are usually selected from soluble and insoluble fibers. In the particular embodiment of the present invention, the added fibers are selected from soluble fiber such as inuline.

Advantageously, the aqueous-based ice confectionery product of the invention has an optimized nutritional balance in terms of added sugar, added fat, and total energy of the product. More particularly, the nutritional assessment of a product according to the invention reveals that it preferably contains less than 12.5g of added sugar per portion of 73g, more than 1.5g of fiber per portion, no added fat and a total energy below 80kcal/100g.

The frozen aqueous-based ice confectionary product of the invention may also comprise further additives which are conventionally contained, if desired, in frozen aqueous-based ice confectionary products. In a preferred embodiment of the present invention, the frozen aqueous-based ice confectionary product of the present invention further comprises 0.01 to 1.00 wt.-% of stabilizers. The stabilizers used are selected from locust bean gum, guar gum, pectins, carragenines and mixtures thereof.

If appropriate, the frozen aqueous-based ice confectionary product of the present invention preferably further contains 0.01 to 2.00 wt.-% of flavours and colours each. Any food grade colour may be used depending on the final confectionary product desired. More preferably, the flavours can be selected from natural fruit flavours.

In a further preferred embodiment of the invention, the frozen aqueous-based ice confectionary product comprises 0 to 3.00 wt.-% of proteins. The frozen aqueous-based ice confectionary product of the invention is preferably a non-dairy product, i.e., a product which does not contain milk ingredients. More preferred, the proteins are selected from vegetable proteins such as wheat proteins, soy bean proteins and others.

The fruit puree which is one of the chief ingredients of the frozen aqueous-based ice confectionary product claimed, is a homogenous product which has been prepared from whole or peeled fruit which has been pulped by a suitable physical process. Suitable fruits include apple, banana, blackberry, blackcurrant, blueberry, cherry, cranberry, gooseberry, grapes, guava, kiwi fruit, mango, orange, papaya, passion fruit, peach, pear, pineapple, plums, pomegranate, pumpkin, raspberry, redcurrant, strawberry, lemon, apricot and tomato, coconut and mixtures thereof.

The fruit concentrate usually comprises a fruit concentration of 1,1 to 40,0%.

A typical moulded stick as shown in figure 1 may have the following composite component structure. The external shell 2 may constitute 30 to 50 % of the whole product, the inner center portion 3 may constitute 40 to 50 % of the whole product. The top coating 4 may be 0 to 30% based on the whole product.

A process for the production of the frozen aqueous-based ice confectionary product of the present invention involves for example a moulding technology conventionally used in the present field of preparing frozen confectionary products. Such a process comprises the steps of introducing a liquid mixture ("external mixture") comprising a fruit content of 60 to 95 wt.-% in a mould. Subsequently, after the shell is completely frozen, the external liquid mix is sucked out. After, a mixture comprising a fruit juice content 60 to 95 wt.-% ("internal mixture") and having a degree of overrun of 20 to 80% is filled in the mould, where after a following liquid mix with same composition as the "external mixture" is dosed to close completely the shell. The overrun of the mixture of the center portion can be obtained through a freezing device and the filling into the mould can be obtained through a volumetric filler.

In a preferred embodiment of the present invention, a stick such as a wooden stick is inserted in the confectionary product body, to allow the extraction by the mould and handle the product at the consumption.

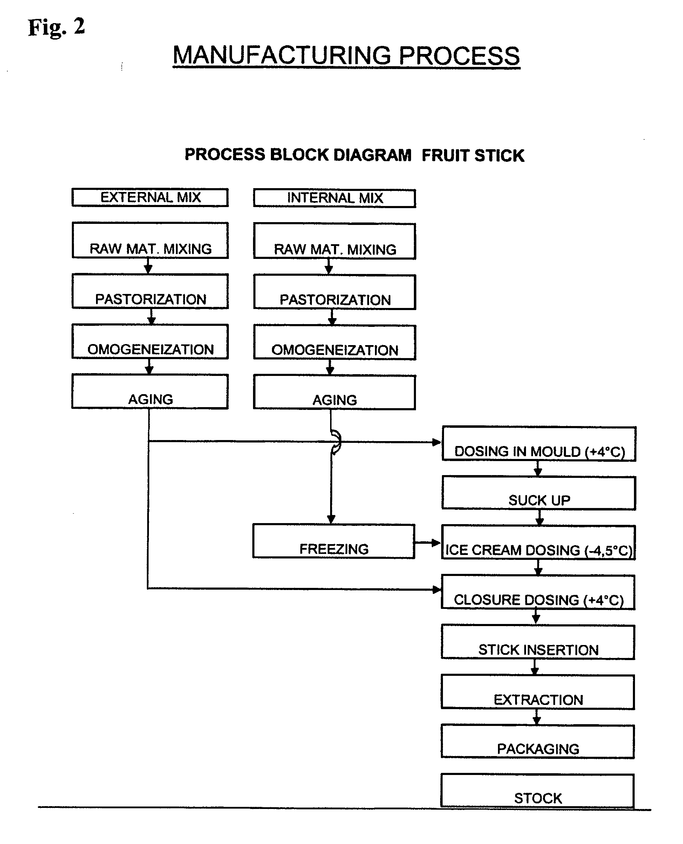

Figure 2 shows a process block diagram for a fruit stick produced as described above. The external mix for the outer shell and the internal mix for the center portion undergo several steps before introducing in the mould. The single steps are as follows:
Raw material mixing: The powder ingredients are added to liquid ingredients in a agitated mixing tank, then the mixture is subjected to a pre-heating treatment.

Pasteurization: The mix is heated to temperature/seconds values according to good manufacturing practices to achieve satisfactory treatment to conform to public health requirements).

Homogenization: The mix is subjected to a homogenisation stage at a pressure of at least 50 to maximum 160 bar at a temperature of at least 70° C to maximum 85°C. The mix is then rapidly cooled to chill temeperature, typically 4°C) and

Aging: Chill temperature is typically 4°C.

After aging, both the mixes are used in a production line commonly used to produce ice cream in moulds.
The external mix is dosed in a mould at a temperature of +4°C. After sucking up of the liquid mix, the internal mix which has been aerated to a degree of 30 to 70%, preferred 60% and frozen to -2°C -8°C, pref -4°C -5°C is further introduced. If desired, a further liquid mix as top coating may be introduced at a temperature of +4°C. The product obtained is then extracted, packaged and stocked according to conventional procedures.

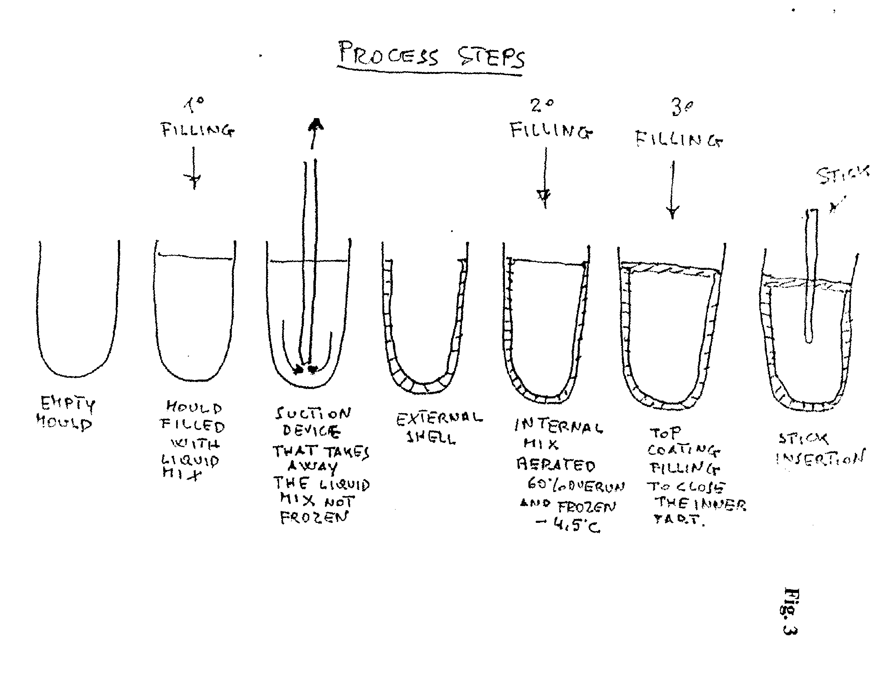

The process steps are schematically shown in Fig. 3. The empty mould is filled with the liquid mix at a temperature of 1°C. A suction device takes away the liquid mix not frozen thereby forming the external shell. The internal mix aerated to 60% overrun and frozen to -4.5°C is then filled in the mould at 2°C. After that, the top coating is filled in the mould to close the inner part at 3°C. Finally, a stick is inserted from the top.

### Examples

The examples below illustrate the invention. In these examples the portions and percentages are by weight, unless otherwise stated.

### Example 1

A high fruit content frozen aqueous-based ice confectionary product is produced by using the following components in order to generate the ingredient list below:

| **Components** | **Quantity** | |
|---|---|---|
| | (g) | (%) |
| Water | 31,732 | 43,469 |
| Peach puree | 17,520 | 24,000 |
| Concentrated Tropic mix juice | 8,541 | 11,700 |
| Sugar | 7,492 | 10,264 |
| Dextrose | 4,990 | 6,836 |
| Vegetable Fiber | 1,460 | 2,000 |
| Concentrated Lemon juice | 0,807 | 1,105 |
| Stab. LBG | 0,134 | 0,184 |
| Yellow colour | 0,073 | 0,100 |
| Vegetable proteins | 0,069 | 0,095 |
| Stab Pectine | 0,052 | 0,071 |
| Stab. Guar gum | 0,046 | 0,063 |
| Mango flavour | 0,044 | 0,060 |
| Peach flavour | 0,022 | 0,030 |
| Stab. Carragenine | 0,017 | 0,024 |
| **Total** | **73,000** | **100,000** |

The single composition for both external and internal mix, here below

### 8 - MIXES

### 8-1 EXTERNAL MIX (for Shell and Closure) Overrun 0%

| **Components** | **Quantity** | |
|---|---|---|
| | (g) | |
| Water | 462,25 | |
| Peach puree | 240,0 | |
| Concentrated Tropic mix juice | 117,0 | |
| Sugar | 105,0 | |
| Dextrose | 40,0 | |
| Vegetable Fiber | 20,0 | |
| Concentrated Lemon juice | 12,0 | |
| Stab. LBG | 0,65 | |
| Mango flavour | 0,6 | |
| Yellow colour | 1,0 | |
| Stab. Guar gum | 1,2 | |
| Peach flavour | 0,3 | |
| **Total** | **1000,0** | |

### 8 - 2 INTERNAL MIX Overrun 60%

| **Components** | **Quantity** | |
|---|---|---|
| | (g) | |
| Water | 404,7 | |
| Peach puree | 240,0 | |
| Concentrated Tropic mix juice | 117,0 | |
| Sugar | 100,0 | |
| Dextrose | 100,0 | |
| Vegetable Fiber | 20,0 | |
| Concentrated Lemon juice | 10,0 | |
| Stab. LBG | 2,4 | |
| Mango flavour | 0,6 | |
| Yellow colour | 1,0 | |
| Vegetable proteins | 2,0 | |
| Stab Pectine | 1,5 | |
| Peach flavour | 0,3 | |
| Stab. Carragenine | 0,5 | |
| **Total** | **1000,0** | |

## Claims

1. A frozen aqueous-based ice confectionary product including
i) a center of aqueous-based ice comprising a fruit content of 60 to 95 wt.-% and having a degree of overrun of 20 to 80 % and
ii) an outer shell of aqueous-based ice comprising a fruit content of 60 to 95 wt.-%.

2. The frozen aqueous-based ice confectionary product according to claim 1 wherein the content of fruit in the center and in the outer shell is in a range of 75 to 90 wt.-%.

3. The frozen aqueous-based ice confectionary product according to claim 2 wherein the content of fruit in the center and in the outer shell is in a range of 80 to 85 wt.-%.

4. The frozen aqueous-based ice confectionary product according to any one of claims 1 to 3 further comprising a top coating having the same composition as the outer shell.

5. The frozen aqueous-based ice confectionary product according to any one of claims 1 to 4 wherein the fruit content is composed of one or more natural fruit juice, fruit puree, fruit concentrate juice and water to reconstitute the original natural fruit composition.

6. The frozen aqueous-based ice confectionary product according to any one of claims 1 to 5 wherein the degree of overrun is in a range of 30 to 70 %.

7. The frozen aqueous-based ice confectionary product according to claim 6 wherein the degree of overrun is in a range of 40 to 60 %.

8. The frozen aqueous-based ice confectionary product according to any one of claims 1 to 7 further comprising 10 to 30 wt.-% of sweetener.

9. The frozen aqueous-based ice confectionary product according to claim 8 further comprising 15 to 25 wt.-% of sweetener.

10. The frozen aqueous-based ice confectionary product according to claim 9 wherein the sweetener is selected from monosaccharides, disaccharides, oligosaccharides, or according to specific requirements artificial sweeteners and mixtures thereof.

11. The frozen aqueous-based ice confectionary product according to any one of claims 1 to 10 further comprising 1 to 6 wt.-% of fibers.

12. The frozen aqueous-based ice confectionary product according to claim 11 wherein the fibers are selected from soluble and insoluble fibers.

13. The frozen aqueous-based ice confectionary product according to any one of claims 1 to 12 further comprising 0.01 to 1.00 wt.-% of stabilisers.

14. The frozen aqueous-based ice confectionary product according to claim 13 wherein the stabilisers are selected from locust bean gum, guar gum, pectines, carragenines and mixtures thereof.

15. The frozen aqueous-based ice confectionary product according to any one of claims 1 to 14 further comprising 0.01 to 2.00 wt.-% of flavours and colours each.

16. The frozen aqueous-based ice confectionary product according to claim 15 wherein the flavours are selected from fruit flavours.

17. The frozen aqueous-based ice confectionary product according to any one of claims 1 to 16 further comprising 0 to 3.00 wt.-% of proteins.

18. The frozen aqueous-based ice confectionary product according to claim 17 wherein the proteins are selected from vegetable proteins.

19. A process for the production of a frozen aqueous-based ice confectionary product comprising the steps of
- introducing a liquid mixture referred as "external mixture" comprising a fruit content of 60 to 95 wt.-% in a mould to form a shell,
- sucking out of the remaining external liquid mixture after the shell is completely frozen,
- filling a mixture comprising a fruit content of 60 to 95 wt.-% and having a degree of overrun of 20 to 80 % in the mould and
- dosing further liquid mix with same composition as "external mixture" to close the formed shell.

20. The frozen aqueous-based ice confectionery product according to any one of claim 1 to 8 wherein the total energy is less than 80Kcal/100g.
